# EUROPEAN PATENT SPECIFICATION

(11) **EP 1 753 994 B1**
(45) Date of publication and mention of the grant of the patent: **19.05.2010**
(21) Application number: 05757681.1
(22) Date of filing: 01.06.2005
(51) Int. Cl.: F16M 13/00, F16F 7/08, F16F 15/02

(54) **MECHANICAL DYNAMICS DAMPING SYSTEM FOR A DEVICE**
DAMPFSYSTEM MIT MECHANISCHER DYNAMIK FÜR EINE VORRICHTUNG
PROCEDE ET APPAREIL PERMETTANT L'ISOLEMENT CONTRE LA DYNAMIQUE MECANIQUE

(30) Priority: 01.06.2004 US 858034
(43) Date of publication of application: 21.02.2007
(73) Proprietor: BAKER HUGHES INCORPORATED, Houston, TX 77019-2118 (US)
(72) Inventor: THIGPEN, Earl, B., Tomball, TX 77377 (US); BURROUGHS, Edward, Glenn, Houston, TX 77055-6829 (US); BOCHAIN, Mark, M., Spring, TX 77379 (US)
(74) Representative: Chamberlain, Alan James
(86) International application number: PCT/US2005/019271
(87) International publication number: WO 2005/119119

(56) References cited:
- DE-A1- 3 904 361
- RU-C1- 2 044 935
- US-A- 3 585 569
- US-A- 4 429 348
- US-A- 5 136 470
- US-A1- 2004 194 261
- US-B1- 6 772 077

## Description

### BACKGROUND OF THE INVENTION

### 1. Field of the Invention

The invention relates generally to the field of isolating devices from mechanical dynamics. More specifically, the present invention relates to a method and apparatus to provide damping for components sensitive to shock and vibration.

### 2. Description of Related Art

The recent past has seen a ubiquitous implementation of electrical processing devices and equipment containing data processing components such as printed circuit boards, integrated circuits, resistors, capacitors and the like. These devices can now be found in automobiles, motorcycles, aircraft, and ships. They are also in use in other devices such as computers, microprocessors, electrical controllers, and sensors. In many of the applications where electrical processing devices are implemented, they are subjected to some type of shock and vibration. While the electrical processing devices do function basically as conduits or switches for electrical signals, they are still primarily formed of a solid structure. As such these devices are subject to failure or diminished functional capacity when they experience some types of vibration and/or shock. To rectify this situation, vibration and shock dampers have been suggested in the past. These include mechanical springs, rubber dampers, diaphragms, resilient supports, and elastomer compounds. Examples of these devices can be found in Singh, U.S. Patent No. 6,130,284, Lee et al. U.S. Patent No.6,621,694, Mintzlaff, U.S. Patent No. 4,893,210, Yamashita, U.S. Patent No. 6,354,575, Dean 4,429,348, Parson 6,473,309, and Heinrich et al., U.S. Patent No. 4,382,587.

Currently many downhole tools used in the exploration and production of hydrocarbons employ sensitive electrical processing devices referred to herein as downhole components. The downhole components include without limitation electrical devices, electrical components, electrical circuits, printed circuit boards, downhole sensors, cooling components, antennas, receivers. Downhole tools also often experience high shock and vibration conditions either during use within a wellbore, or during handling after they have been assembled and prior to use within a wellbore. Often times the shock or vibration can damage the downhole components thereby rendering the component inoperable or ineffective. Further, the shock and vibration during use can cause the downhole component to provide erroneous data, this is especially so when the downhole component is a sensor monitoring data downhole for later analysis. The harsh downhole conditions introduce another environmental factor that must be considered, and that is the high temperature, which can sometimes exceed 200°C. Accordingly, any damping device or element used in a downhole application must be able to function relatively consistently at the expected range of operating temperatures.

Various attempts have been made to lessen the shock and vibration of mechanical dynamics experienced by downhole components during handling and use of downhole tools. These attempts generally involve attempting to dampen the shock and vibration applied to the downhole components with some type of an elastomer. For example, rubber O-rings have been employed to isolate downhole components from shock and vibration experienced by a downhole tool. Additionally, downhole components have been seated within the downhole tools on visco-elastomeric materials in an effort to minimize the shock and vibration imparted to the downhole component. However these static suspension systems can often amplify the effects of shock induced vibration instead of minimizing the effect. Therefore, there exists a need for a device for isolating downhole components of a downhole tool from the damaging and data altering effects of shock and vibration encountered during the use, handling and assembly of the downhole tool.

US 5,136,470 describes a stiffener for a printed circuit board; and RU 2044935 describes a shock absorbing device.

### BRIEF SUMMARY OF THE INVENTION

According to one aspect of the present invention, there is provided a mechanical dynamics damping system for a downhole component having connectable area, the mechanical dynamics damping system comprising a first damping member having a mating side and a connecting side, wherein said mating side of said first damping member comprises a multiplicity of outwardly extending members, a second damping member having a mating side and a connecting side wherein said mating side of said second damping member comprises a multiplicity of outwardly extending members, wherein said first damping member comprises a single piece adapted for coupling to a downhole component, said second damping member is adapted for coupling to a surface located within a downhole tool, the outwardly extending members of the first damping member are adapted to mate with the outwardly extending members of the second damping member, and at least a portion of the outwardly extending members of the first damping member are in frictional rubbing contact with at least a portion of the outwardly extending members of the second damping member, wherein the first damping member substantially is adapted to cover a connectable area of a downhole component, wherein said damping members are suitable for high temperature applications, and wherein the component is selected from the group consisting of electrical circuit boards, data recording devices, electrical receivers and transmitters, sensors, and printed circuit boards.

According to a second aspect of the present invention, there is provided a downhole tool comprising a downhole member having a surface located therein, a damping system as claimed in any one of the preceding claims and a downhole component located in the downhole member and secured thereto via the damping system.

The present invention includes a damping system useful to isolate a device from mechanical dynamics from a surface comprising a first quantity of damping material having a mating side and a connecting side, wherein the mating side of the first quantity of shock absorbing material comprises a multiplicity of outwardly extending members and a second quantity of damping material having a mating side and a connecting side wherein the mating side of the second quantity of damping material comprises a multiplicity of outwardly extending members. The first quantity of damping material can be affixed to the device and the second quantity of damping material can affixed to the surface, where the multiplicity of outwardly extending members of the first damping material mate with the multiplicity of outwardly extending members of the second damping material.

At least a portion of the outwardly extending members of the first quantity of damping material should be in frictional rubbing contact with at least a portion of the outwardly extending members of the second quantity of damping material. In an alternative embodiment of the present invention, the outwardly extending members of the first quantity of damping material are comprised of a series of hooks and the outwardly extending members of the second quantity of damping material are comprised of a series of loops. Optionally, the outwardly extending members of the first quantity of damping material can be comprised of a series of loops and the outwardly extending members of said second quantity of damping material can be comprised of a series of hooks. Alternatively, the outwardly extending members of the first quantity of damping material can be comprised of a multiplicity of fingers and the outwardly extending members of the second quantity of damping material can be comprised of a multiplicity of fingers.

The surface area of the first smooth surface is preferably substantially equal to the surface area of the connectable portion of the device. The device can be selected from the group consisting of electrical circuit boards, data recording devices, electrical receivers and transmitters, sensors, and printed circuit boards. The damping material should be suitable for high temperature applications and suitable for use within a wellbore.

The present invention includes a method of isolating a device having a connectable area from mechanical dynamic forces. The method of the present invention comprises securing the connecting side of a first quantity of damping material to a portion of the device, securing the connecting side of a second quantity of damping material to a surface, and mating the mating side of the first quantity of damping material with the mating side of the second quantity of damping material. The present method can further comprise securing the connecting side of a first quantity of damping material to a portion of the shock sensitive device, wherein the portion has a surface area that is substantially the same as the surface area of the connectable area of the device. Wherein the mating side of the first quantity of damping material can be comprised of a series of hooks and the mating side of said second quantity of damping material can be comprised of a series of loops. Optionally, the mating side of the first quantity of damping material can be comprised of a series of loops and the outwardly extending members of the second quantity of damping material can be comprised of a series of hooks. Also, the mating side of the first quantity of damping material can be comprised of a multiplicity of fingers and the mating side of the second quantity of damping material can be comprised of a multiplicity of fingers.

The device for use with the method can be selected from the group consisting of electrical circuit boards, avionics, data recording devices, electrical receivers and transmitters, sensors, and printed circuit boards. The damping material should be suitable for high temperature applications as well as suitable for downhole applications.

### BRIEF DESCRIPTION OF THE SEVERAL VIEWS OF THE DRAWING.

Figure 1a depicts a side view of one embodiment of a damping material in combination with a shock sensitive device.
Figure 1b depicts a side view of one embodiment of a damping material.
Figure 2a illustrates in side view one embodiment of a damping strip.
Figure 2b illustrates in side view one embodiment of a damping strip.
Figure 2c illustrates in side view one embodiment of a damping strip.
Figure 3 shows in perspective view a downhole component securable with one embodiment of the present invention.
Figure 4 displays a case and sensor having damping material attached thereto.
Figure 5 illustrates a cross sectional view of a sensor having damping material.
Figure 6 depicts an embodiment of the present invention in an overlap configuration.

### DETAILED DESCRIPTION OF THE INVENTION

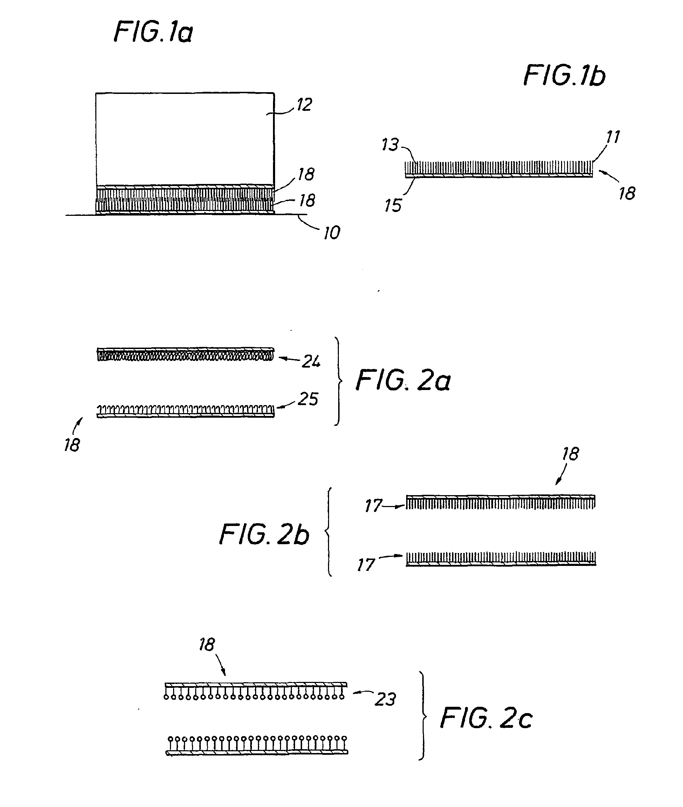

With reference to the drawing herein, an embodiment of the present invention is illustrated in a side view in Figure 1. A device 12 is shown releaseably secured to a surface 10 by a pair of damping strips 18. The device 12 can be any device susceptible to being damaged or adversely affected by mechanical dynamic forces, such as shock, vibration and shock or vibration. Examples of such devices include without limitation electrical components, such as electrical circuit boards, avionics, data recording devices, electrical receivers and transmitters, and sensors. The surface 10 therefore can represent the structure or base on which the device 12 is typically secured. Examples of possible foundations 10 include electrical component mounting boards found in computers, bulkheads/shelves in aircraft, mounting surfaces for downhole components within downhole tools, and other securing surfaces for mechanically dynamic sensitive devices. Each damping strip 18 is comprised of a damping material that has a connecting side 15 and a mating side 13.

The mating side 13 of each damping strip 18 should have a multiplicity of outwardly extending members 11 formed thereon. The outwardly extending members 11 should be capable of cooperatively mating with the members 11 formed on the mating side 13 of a corresponding damping strip 18. Cooperative mating includes the capability of these members 11 on corresponding pieces of damping material to be releasably joined to one another, as well as the ability to absorb and dampen any mechanical dynamics imparted onto these members when mated to each other. Mechanical dynamics include, shock, vibration, and the combination of shock and vibration together. As can be seen in Figure 1, mating of the damping material involves urging together the mating sides 13 of two corresponding pieces of damping material (or two damping strips 18) such that the corresponding upwardly extending members 11 mate together in frictional contact. Thus when the damping strips 18 are mated, the members 11 of the damping strips 18 are in frictional rubbing contact. This mated frictional rubbing contact between the members absorbs and dampens the mechanical dynamics experienced by one of the damping strips 18. Therefore when two damping strips 18 of the present invention are mated, they are secured to one another while still being isolated from the mechanical dynamics experienced by the other.

The connecting side 15 of each damping strip 18 should be capable of being secured to either a device 12 or a surface 10. The connecting side 15 should be a mostly even and level surface for attachment to a device 12 or a surface 10. Secure attachment of the connecting side 15 of the damping strip 18 can involve adhesives such as RTV materials, glue, or epoxy; other securing alternatives include mechanical fastening, such as bolts, screws, rivets, pins, and the like.

Accordingly, while the damping strips 18 of the present invention can be mated or secured to one another, either of the damping strips 18 can be isolated from mechanical dynamics imparted upon the other damping strip 18. As such, the damping strips 18 of the present invention provide the capability of releasably securing a device 12 to the surface 10 while at the same time isolating the device 12 from the mechanical dynamics experienced by the surface 10.

As shown in Figure 2a, it is preferred that the outwardly extending members 11 disposed on the damping material be comprised of a series of hooks 25 and loops 24, such as VELCRO®. The hooks 25 and loops 24 are provided on the mating side 13 of a pair of opposing damping strips 18. Joining the surfaces having the hooks 25 and loops 24 disposed thereon provides a releasable bond and a mechanical dynamic absorbing capability. Alternatively, as shown in Figure 2b, the outwardly extending members 13 of the damping material can be comprised of a multiplicity of fingers 17. When the damping strips 18 having a multiplicity of fingers 17 is mated, the fingers 17 from each opposing damping strip 18 can be in frictional and rubbing contact. This frictional and rubbing contact between the opposing fingers 17 has a mechanical dynamic absorption capability, such that any device 12 secured with the damping strip 18 having the multiplicity of fingers 17 can be isolated from the damaging and deleterious effects of mechanical dynamics.

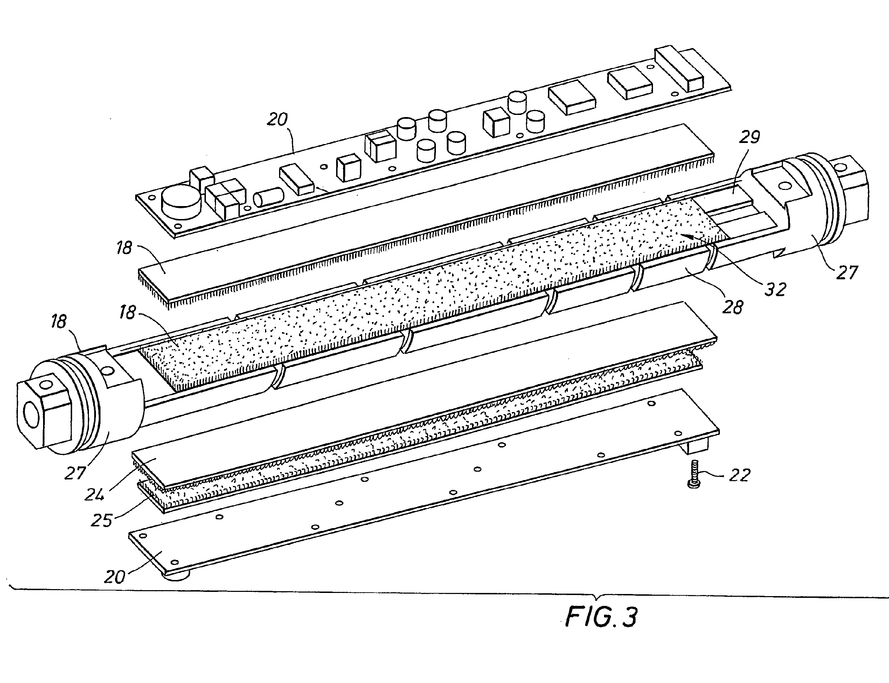

An alternative embodiment of the present invention is shown in an exploded view in Figure 3. The embodiment of the invention of Figure 3 includes a series of damping strips 18 attachable to a downhole component and chassis 26. In the embodiment of Figure 3, the downhole component shown is a printed circuit board 20 (PCB). The chassis 26 is shown having two largely cylindrical ends 27 connected by the sides 28 of the chassis 26 that extend along the axis of the chassis 26. A base 29 is formed within the chassis 26 that is largely perpendicular to the sides 28 and connects the ends 27 of the chassis 26. A trough 32 is formed along the length of the chassis 26 bounded along its perimeter by the sides 28 and the ends 27 and bounded on its bottom by the base 29.

In the embodiment of Figure 3, it is preferred that the damping strip 18 adhered to the base 29 be comprised of a series of hooks 25 and loops 24. More specifically, the series of interlocking hooks 25 should be disposed on its mating side. Likewise, it is preferred that the damping strip 18 secured to the downhole component include a series of interlocking loops 24 on its mating side. It should be pointed out that the present invention is not limited to use to the type of chassis 26 illustrated in Figure 3, but can include any type of currently known or later developed mounting device used to secure a downhole component within a downhole tool.

As previously noted, the embodiment of the invention of Figure 3 is shown in an exploded view. Thus while the damping strip 18 of Figure 3 is shown to be separate from the PCB 20, once assembled the shock absorbing strip 18 should be securedly connected to the bottom of the PCB 20 on its smooth side, preferably with an RTV type adhesive. Further assembly of the present invention involves mating opposing damping strips 18 on their mating side after they have been respectively securedly connected to the base 29 and the PCB 20. Care should be taken while mating the opposing damping strips 18 when the mating side of the damping strips 18 includes hooks 24 and loops 25. It is important that a proper tolerance exists between the hooks 24 and loops 25 to isolate the downhole component from damaging forces. The PCB 20 (or any other like downhole component) will not be isolated from mechanical dynamics if the hooks 25 and loops 24 are too loosely or too tightly mated. It is well within the capabilities of those skilled in the art to determine the proper tolerance between the hooks 24 and loops 25 without undue experimentation.

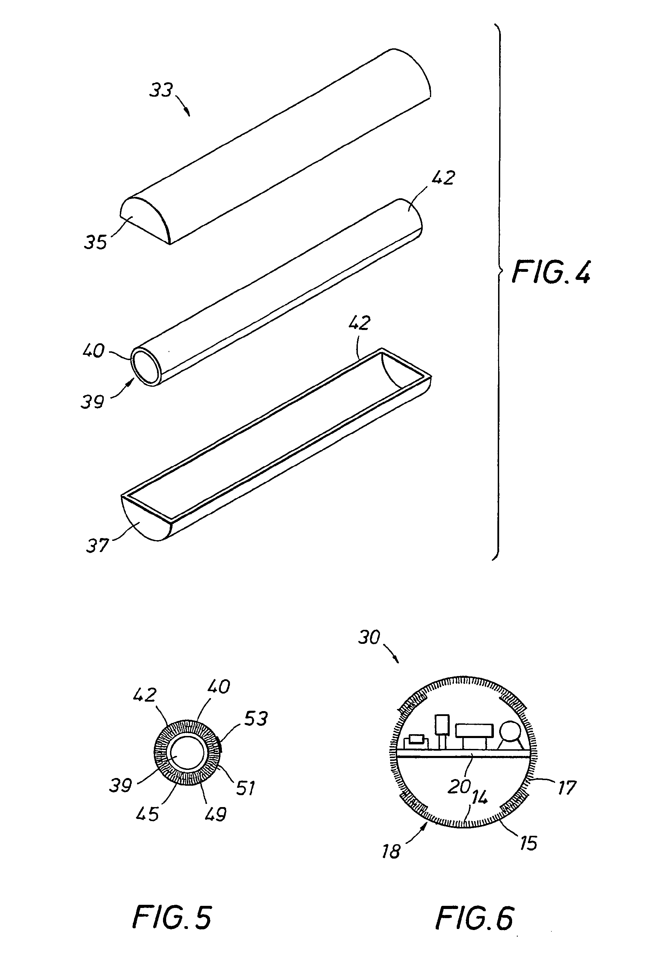

As shown in Figures 4 and 5, the present invention can also be used to secure cylindrically configured downhole components within a case or housing that are secured within a downhole tool. Here an enclosure 33 is shown comprising a hemispherical case top 35 and a hemispherical case bottom 37, where the case top 35 and the case bottom 37 each is hollowed out along their respective axis to receive a cylindrical sensor 39 therein. Inner damping material 40 is affixed to the outer surface of the cylindrical sensor 39 on its smooth side 45 such that its mating side 47 is projecting outward from the cylindrical sensor 39. Corresponding outer damping material 42 can be wrapped around the inner damping material 40 with its mating side 49 projecting inward to ward the mating side 47 of the inner damping material 40. The travel of the damping absorbing material 42 can exceed 360° thereby providing an overlap 53. Upon attaching both the inner and outer damping material (40, 42) to the sensor 39, the entire assembly can be stowed within the enclosure 33. The presence of the corresponding inner and outer damping materials (40, 42) within the enclosure 33 can isolate the cylindrical sensor 39 from mechanical dynamics imparted onto the enclosure 33.

Figure 6 illustrates an alternative manner of applying the damping strips 18 to a device susceptible to damage from shock and/or vibration, such as a PCB 20. Here multiple damping strips 18 are wrapped around the PCB 20 and the mating sides of the individual damping strips 18 face the mating side of the next adjacent damping strip 18. While the mating components of Figure 6 comprise hooks 14 and loops 17, the mating sides of this embodiment of the invention could include any of the fastening surfaces herein disclosed. The wrapped device 30 is securable to a base by adhesive applied to the smooth surface 15 of one of the damping strips 18.

Alternatively, the inner damping material 40 can be attached to the sensor 39 and the outer damping material 42 can be secured to the inside of the case top 35 and case bottom 37. Arranging the inner and outer damping materials (40, 42) in this fashion allows the sensor 39 to be secured within the case 33 as well as being protected against mechanical dynamic forces. The damping material can be comprised of the hook 25 and loop 24 arrangement of Figure 2a, the multiplicity of fingers 17 of Figure 2b, as well as the ball tipped fingers of Figure 2c.

The amount of coverage over the connectable area by the damping strips 18 is also important. The connectable area refers to the area on the device 12 on which damping strips 18 can be connected. For example, when the downhole component is a PCB 20, its connectable area is primarily the area on the bottom side of the PCB 20. When the downhole component is a cylindrical sensor 39, the connectable area is largely equal to the exterior radial surface along the axis of the cylindrical sensor, and does not include the ends of the sensor. With regard to the PCB 20 and like items, in order to effectively protect the PCB 20 against mechanical dynamics, the area of the damping strips 18 adhered to the PCB 20 (the coverage area) should be substantially the same as the area of the connectable area. However it has been found that other types of components may require a different amount of coverage area depending on how robust the component is and the physical parameters, such as the component's mass, its moment of inertia, and stiffness. Other variables include the type of damping strips 18as well as temperature. The use of a vibrational test device, such as a shaker, may be employed to tune the component and to ascertain the required coverage area of a specific component.

Due to the high temperatures that can be experienced downhole, the damping strips 18 should be comprised of a high temperature material. For the purposes of the present invention, high temperature materials include those capable of withstanding from about 150°C to about 175°C without experiencing any noticeable reduction in performance capability. NOMEX® is one such material that meets the performance criteria necessary to operate in high temperature downhole conditions. Accordingly in an exemplary example of the present invention, the shock absorbing strips 18 can be comprised of NOMEX® or a like material.

The present invention described herein, therefore, is well adapted to carry out the objects and attain the ends and advantages mentioned, as well as others inherent therein. While a presently preferred embodiment of the invention has been given for purposes of disclosure, numerous changes exist in the details of procedures for accomplishing the desired results. For example, in addition to the hooks and loops and multiplicity of opposing fingers above described, the damping strip 18 can also contain a series of hooks and hooks, loops and loops, fingers and hooks, or fingers and loops. These variations and other similar modifications will readily suggest themselves to those skilled in the art, and are intended to be encompassed within the scope of the appended claims.

## Claims

1. A mechanical dynamics damping system for a downhole component (12) having connectable area, the mechanical dynamics damping system comprising:
a first damping member (18) having a mating side (13) and a connecting side (15), wherein said mating side (13) of said first damping member comprises a multiplicity of outwardly extending members (11); and
a second damping member (18) having a mating side (13) and a connecting side (15) wherein said mating side (13) of said second damping member comprises a multiplicity of outwardly extending members (11);
wherein said first damping member comprises a single piece adapted for coupling to a downhole component (12), said second damping member is adapted for coupling to a surface (10) located within a downhole tool, the outwardly extending members (11) of the first damping member are adapted to mate with the outwardly extending members (11) of the second damping member, and at least a portion of the outwardly extending members (11) of the first damping member are in frictional rubbing contact with at least a portion of the outwardly extending members (11) of the second damping member, and wherein the first damping member substantially is adapted to cover a connectable area of a downhole component (12);
wherein said damping members are suitable for high temperature applications; (exceeding 200°C) and
wherein the component (12) is selected from the group consisting of electrical circuit boards, data recording devices, electrical receivers and transmitters, sensors, and printed circuit boards.

2. A damping system as claimed in claim 1, wherein the outwardly extending members (11) of said first damping member comprise a series of hooks (25) and the outwardly extending members (11) of said second damping member comprise a series of loops (24).

3. A damping system as claimed in claim 1, wherein the outwardly extending members (11) of said first damping member comprise a series of loops (24) and the outwardly extending members (11) of said second damping member comprise a series of hooks (25).

4. A damping system as claimed in claim 1, wherein the outwardly extending members (11) of said first damping member comprise a multiplicity of fingers and the outwardly extending members (11) of said second damping member comprise a multiplicity of fingers.

5. A downhole tool comprising:
a downhole member having a surface located therein;
a damping system as claimed in any one of the preceding claims; and
a downhole component (12) located in the downhole member and secured thereto via the damping system.

## Patentansprüche

1. Mechanisches Dynamikdämpfungssystem für eine Bohrlochkomponente (12) mit einem verbindbaren Bereich, wobei das mechanische Dynamikdämpfungssystem umfasst:
- ein erstes Dämpfungselement (18), das eine Paarungsseite (13) und eine Verbindungsseite (15) aufweist, wobei die Paarungsseite (13) des ersten Dämpfungselements eine Vielzahl von sich nach außen erstreckenden Elementen (11) umfasst; und
- ein zweites Dämpfungselement (18), das eine Paarungsseite (13) und eine Verbindungsseite (15) aufweist, wobei die Paarungsseite (13) des zweiten Dämpfungselements eine Vielzahl von sich nach außen erstreckenden Elementen (11) umfasst;
- wobei das erste Dämpfungselement ein einzelnes Stück umfasst, das für eine Kopplung mit einer Bohrlochkomponente (12) angepasst ist, das zweite Dämpfungselement für eine Kopplung mit einer innerhalb eines Bohrlochs befindlichen Oberfläche (10) angepasst ist, die sich nach außen erstreckenden Elemente (11) des ersten Dämpfungselements für ein Zusammenpassen mit den sich nach außen erstreckenden Elementen (11) des zweiten Dämpfungselements angepasst sind, und wenigstens ein Abschnitt der sich nach außen erstreckenden Elemente (11) des ersten Dämpfungselements in reibendem Schleifkontakt mit wenigstens einem Abschnitt der sich nach außen erstreckenden Elemente (11) des zweiten Dämpfungselements stehen, und wobei das erste Dämpfungselement im Wesentlichen für eine Abdeckung eines verbindbaren Bereichs einer Bohrlochkomponente (12) angepasst ist;
- wobei die Dämpfungselemente für Hochtemperaturanwendungen (mehr als 200° C) geeignet sind; und
- wobei die Komponente (12) aus der Gruppe ausgewählt ist, die aus elektrischen Schaltplatten, Datenaufzeichnungsvorrichtungen, elektrischen Empfängern und Sendern, Sensoren und gedruckten Leiterplatten besteht.

2. Dämpfungssystem nach Anspruch 1, wobei die sich nach außen erstreckenden Elemente (11) des ersten Dämpfungselements eine Reihe von Haken (25) umfassen und die sich nach außen erstreckenden Elemente (11) des zweiten Dämpfungselements eine Reihe von Schleifen (24) umfassen.

3. Dämpfungssystem nach Anspruch 1, wobei die sich nach außen erstreckenden Elemente (11) des ersten Dämpfungselements eine Reihe von Schleifen (24) umfassen und die sich nach außen erstreckenden Elemente (11) des zweiten Dämpfungselements eine Reihe von Haken (25) umfassen.

4. Dämpfungssystem nach Anspruch 1, wobei die sich nach außen erstreckenden Elemente (11) des ersten Dämpfungselements eine Vielzahl von Fingern umfassen und die sich nach außen erstreckenden Elemente (11) des zweiten Dämpfungselements eine Vielzahl von Fingern umfassen.

5. Bohrlochwerkzeug umfassend:
- ein Bohrlochelement mit einer darin befindlichen Oberfläche;
- ein Dämpfungssystem nach einem der vorhergehenden Ansprüche; und
- eine Bohrlochkomponente (12), die in dem Bohrlochelement angeordnet ist und über das Dämpfungssystem daran befestigt ist.

## Revendications

1. Système d'amortissement contre la dynamique mécanique pour un composant (12) de fond de trou ayant une région connectable, le système d'amortissement contre la dynamique mécanique comprenant :
un premier élément d'amortissement (18) ayant une face conjuguée (13) et une face de connexion (15), dans lequel ladite face conjuguée (13) dudit premier élément d'amortissement comprend une pluralité d'éléments (11) s'étendant vers l'extérieur ; et
un second élément d'amortissement (18) ayant une face conjuguée (13) et une face de connexion (15), dans lequel ladite face conjuguée (13) dudit second élément d'amortissement comprend plusieurs éléments (11) s'étendant vers l'extérieur ;
dans lequel ledit premier élément d'amortissement comprend une seule pièce adaptée pour l'accouplement à un composant de fond de trou (12), ledit second élément d'amortissement est adapté pour l'accouplement à une surface (10) située dans un outil de fond de trou, les éléments (11) s'étendant vers l'extérieur du premier élément d'amortissement sont adaptés pour se conjuguer avec les éléments (11) s'étendant vers l'extérieur du second élément d'amortissement, et au moins une partie des éléments (11) s'étendant vers l'extérieur du premier élément d'amortissement se trouvent en contact frictionnel avec au moins une partie des éléments (11) s'étendant vers l'extérieur du second élément d'amortissement, et dans lequel le premier élément d'amortissement est essentiellement adapté pour couvrir une région connectable d'un composant de fond de trou (12) ;
dans lequel lesdits éléments d'amortissement sont appropriés aux applications à température élevée (dépassant les 200°C) ; et
dans lequel le composant (12) est choisi dans le groupe constitué de cartes de circuits électriques, dispositifs d'enregistrement de données, récepteurs et émetteurs électriques, capteurs et cartes de circuits imprimés.

2. Système d'amortissement tel que revendiqué dans la revendication 1, dans lequel les éléments (11) s'étendant vers l'extérieur dudit premier élément d'amortissement comprennent une série de crochets (25) et les éléments (11) s'étendant vers l'extérieur dudit second élément d'amortissement comprennent une série de boucles (24).

3. Système d'amortissement tel que revendiqué dans la revendication 1, dans lequel les éléments (11) s'étendant vers l'extérieur dudit premier élément d'amortissement comprennent une série de boucles (24) et les éléments (11) s'étendant vers l'extérieur dudit second élément d'amortissement comprennent une série de crochets (25).

4. Système d'amortissement tel que revendiqué dans la revendication 1, dans lequel les éléments (11) s'étendant vers l'extérieur dudit premier élément d'amortissement comprennent plusieurs doigts et les éléments (11) s'étendant vers l'extérieur dudit second élément d'amortissement comprennent plusieurs doigts.

5. Outil de fond de trou comprenant :
un élément de fond de trou dans lequel se situe une surface ;
un système d'amortissement tel que revendiqué dans l'une quelconque des revendications précédentes ; et
un composant de fond de trou (12) situé dans l'élément de fond de trou et étant solidaire par l'intermédiaire du système d'amortissement.
